# EUROPEAN PATENT APPLICATION

(11) **EP 3 039 960 A1**
(43) Date of publication of application: **06.07.2016**
(21) Application number: 15165169.2
(22) Date of filing: 27.04.2015
(51) Int. Cl.: A01G 9/26

(54) **PLANT LIGHTING APPARATUS**

(30) Priority: 05.01.2015 TW 104100060
(71) Applicant: Cal-Comp Biotech Co., Ltd., New Taipei City 222 (TW)
(72) Inventor: Chang, Ming-Hao, 222 New Taipei City (TW)
(74) Representative: Becker Kurig Straus

(57) **Abstract**

A plant light apparatus is provided. The plant light apparatus (100, 200) includes a main body (105), a planting region (130), and an emitting region (140, 240). The main body includes a first plane (110) and a second plane (120, 220). The first plane is opposite to the second plane. The planting region is located on the first plane of the main body. The emitting region is a polygon located on the second plane of the main body. The plant light apparatus further includes a plurality of sets of main light sources (152, 154, 156, 158, 252, 254, 256, 258), where the sets of the main light sources are respectively located on a plurality of corners of the emitting region, such that and an illuminance intensity of the planting region obtained from the main light sources is within a predefined luminance intensity interval.

## Description

### BACKGROUND

### Technical Field

The invention relates to a plant lighting technique, and particularly relates to a plant lighting apparatus.

### Related Art

Plants need three indispensable factors to grow: sunshine, air and water. In recent years, since artificial light plant growing is to breed plants indoors, the plant growing is not liable to be influenced by external factors (such as weather, climate, insect pest, etc.), many companies devote to develop such plant breeding method in order to prevent food shortage in the future.

To irradiate plants by using artificial light sources can reduce the time required for a plant growth cycle, so as to accelerate harvest of the plants. However, if the plants are unable to get sufficient light irradiation in the process of plant breeding, a plant growing rate thereof is slowed down. The plants bred at the same period may have a low harvest quality due to a phenomenon of uneven illuminance intensity. Therefore, it is an important issue in the field to irradiate the plants by using uniform light sources, such that the illuminance intensity got by each of the plants is uniform, and a growing degree of each plant is similar, so as to enhance the quality of the plants at harvest.

### SUMMARY

The invention is directed to a plant lighting apparatus, by which each plant in the apparatus gets a uniform illumination based on proper light source distribution and configuration, so as to enhance the quality of the plants at harvest.

The invention provides a plant lighting apparatus including a main body, a planting region, and an emitting region. The main body includes a first plane and a second plane. The first plane is opposite to the second plane. The planting region is located on the first plane of the main body. The emitting region is a polygon located on the second plane of the main body. The plant lighting apparatus further includes a plurality sets of main light sources, the main light sources are respectively disposed at a plurality of corners of the emitting region, such that an illuminance intensity of the planting region obtained from the plurality sets of main light sources is within a predetermined illuminance intensity interval.

In an embodiment of the invention, the plant lighting apparatus further includes at least one set of secondary light source respectively disposed on at least one side of the emitting region.

In an embodiment of the invention, the main light sources are respectively disposed at all of the corners or a part of the corners of the emitting region.

In an embodiment of the invention, the polygon is a rectangle, and the main body further includes an operation panel. The operation panel is adjacent to a first long side of the emitting region. The operation panel is not adjacent to a second long side of the emitting region. A space between the first long side and a first side of the second plane where the emitting region is located is wider than a space between the second long side and a second side of the plane where the emitting region is located, and the number of the two sets of the main light sources on the first long side is greater than the number of the two sets of the main light sources on the second long side.

In an embodiment of the invention, the two sets of the main light sources on the first long side respectively include four rows of light-emitting diode (LED) light sources.

In an embodiment of the invention, the two sets of the main light sources on the second long side respectively include three rows of light-emitting diode (LED) light sources.

In an embodiment of the invention, the number of the at least one secondary light source on the first long side is greater than the number of the at least one secondary light source on the second long side.

In an embodiment of the invention, a center area of the emitting region is not configured with any light source.

In an embodiment of the invention, the first plane and the second plane are spaced by 200 mm.

In an embodiment of the invention, an irradiation angle of the light sources is at least 100 degrees.

In an embodiment of the invention, the predetermined illuminance intensity interval is 10,000 lux to 13,000 lux.

In an embodiment of the invention, the main body further includes at least one set of auxiliary light sources, which is disposed at a third plane of the main body, where the third plane is different to the second plane where the emitting region is located.

In an embodiment of the invention, the polygon is a triangle, and the sets of the main light sources are respectively disposed at all of the corners of the emitting region.

In an embodiment of the invention, the polygon is a pentagon, and the sets of the main light sources are respectively disposed at any three corners of the emitting region. The two corners adjacent to one set of the main light sources are not configured with the main light source.

In an embodiment of the invention, the polygon is a hexagon, and the sets of the main light sources are respectively disposed at two opposite corners of the emitting region, and the sets of the secondary light sources are respectively at two opposite sides of the emitting region.

In an embodiment of the invention, the polygon is an octagon, and the sets of the main light sources are respectively disposed at four corners opposite to each other in pairs in the emitting region.

According to the above descriptions, in the plant lighting apparatus, multiple sets of the main light sources are disposed at a plurality of corners of the emitting region to achieve proper configuration of the light sources, such that each plant in the planting region of the plant lighting apparatus gets a uniform illuminance intensity, so as to enhance the quality of plants at harvest.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block schematic diagram of a plant lighting apparatus according to a first embodiment of the invention.
FIG. 2 is a block schematic diagram of a light source configuration of a plant lighting apparatus according to a second embodiment of the invention.
FIG. 3 is a block schematic diagram of a light source configuration of a plant lighting apparatus according to a third embodiment of the invention.
FIG. 4 is a schematic diagram illustrating a configuration of LED light sources of a plant lighting apparatus according to the third embodiment of the invention.
FIG. 5 is a schematic diagram illustrating illuminance measuring positions of a plant lighting apparatus according to the third embodiment of the invention.
FIG. 6 is a schematic diagram of a light source configuration of a plant lighting apparatus according to an embodiment of the invention.
FIG. 7A and FIG. 7B are schematic diagrams illustrating irradiation of a set of light sources of a plant lighting apparatus
FIG. 8 is a block schematic diagram of a light source configuration of a plant lighting apparatus according to a fourth embodiment of the invention.
FIG. 9 is a block schematic diagram of a light source configuration of a plant lighting apparatus according to a fifth embodiment of the invention.
FIG. 10 is a block schematic diagram of a light source configuration of a plant lighting apparatus according to a sixth embodiment of the invention.
FIG. 11 is a block schematic diagram of a light source configuration of a plant lighting apparatus according to a seventh embodiment of the invention.
FIG. 12 is a block schematic diagram of a light source configuration of a plant lighting apparatus according to an eighth embodiment of the invention.

### DETAILED DESCRIPTION OF DISCLOSED EMBODIMENTS

### Implementation of each embodiment is described in detail below.

### First embodiment

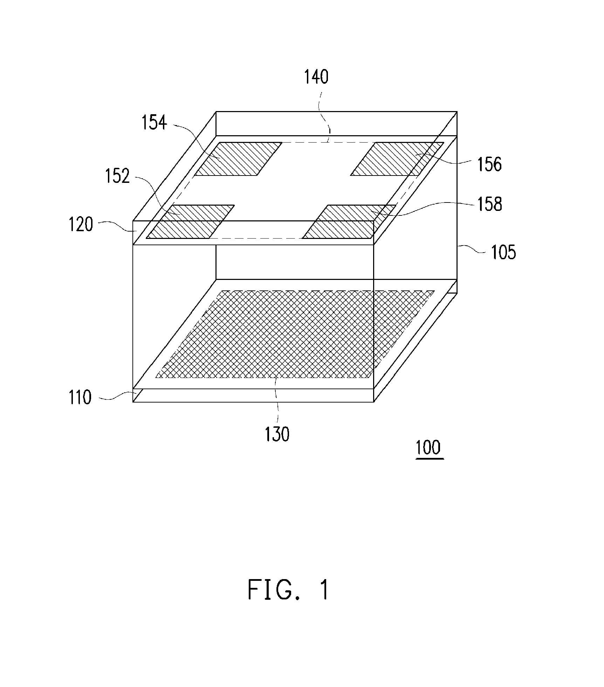

FIG. 1 is a block schematic diagram of a plant lighting apparatus 100 according to a first embodiment of the invention. Referring to FIG. 1, the plant lighting apparatus 100 includes a main body 105, a planting region 130, and an emitting region 140. In the present embodiment, the main body 105 can be a cubic box, which has a bottom plane (which is also referred to as a first plane) 110 and a top plane (which is also referred to as a second plane) 120. The first plane and the second plane are opposite to each other. For example, the first plane and the second plane are parallel to each other. The bottom plane (the first plane 110) and the top plane (the second plane) 120 have a certain space therebteween. In this way, plants growing in the planting region 130 may have a proper growing space, and can get sufficient lights. In an embodiment of the invention, the bottom plane (the first plane 110) and the top plane (the second plane) 120 are spaced by 200 mm. Moreover, besides that the main body 105 of the cubic box includes the bottom plane (the first plane 110) and the top plane (the second plane) 120, four side plates can be erected at the sides of the main body 105, such that the plants can grow in the space, and one of the side plates is a door plate that can be opened and closed to facilitate a grower finishing plant conservation. The side plates can be made of an opaque material such as wood, metal, stone, mirror, etc., or can be made of a transparent material such as glass or acrylic. The side plates can be configured with holes to facilitate air ventilation. Moreover, three side plates can be erected at the sides of the main body 105, and the side without the side plate is to facilitate the grower finishing plant conservation. Particularly, the main body 105 may also have no side plate erected there around, so as to facilitate the grower finishing plant conservation, and meanwhile the plants may have a maximum growing space and poor ventilation is avoided. The number and material of the side plates are not limited by the invention.

The planting region 130 can be a rectangle, and is located on the bottom plane (the first plane) 110 of the main body 105. The plants can be arranged in the planting region on the bottom plane (the first plane) 110 in a potting form. An area of the planting region 130 is not greater than an area of the bottom plane (the first plane) 110. Namely, the area of the planting region 130 is included in the area of the bottom plane (the first plane) 110. Particularly, the shape and size of the planting region 130 can be varied along with the shape and size of the bottom plane (the first plane) 110, which is not limited by the invention.

The emitting region can be a polygon. In the present embodiment, the emitting region is, for example, a rectangle, which is located on the top plane (the second plane) 120 of the main body 105, and is located above the planting region 130. The emitting region 140 can be located on the top plane (the second plane) 120 and faces the planting region 130, such that the emitting region 140 can provide lights to the plants cultivated in the planting region 130. An area of the emitting region 140 is not greater than an area of the top plane (the second plane) 120. Namely, the area of the emitting region 140 is included in the area of the top plane (the second plane) 120. Particularly, the shape and size of the emitting region 140 can be varied along with the shape and size of the top plane (the second plane) 120, which is not limited by the invention. Moreover, an area of the emitting region 140 mapped to the planting region 130 is not greater than the area of the planting region 130. In other words, the region formed by mapping the emitting region 140 to the planting region 130 is not greater than the planting region 130. Moreover, a space of the planting region 130 may include a space of the emitting region 140. To be specific, light sources can be set in the emitting region 140. In some embodiments, those skilled in the art can design the shapes of the planting region and the emitting region to be the same or different according to an actual requirement. For example, the planting region located on the first plane can be designed into a rectangle, and the emitting region located on the second plane can be designed into a triangle, a rectangle, a pentagon, or a hexagon.

Particularly, in order to ensure that the light sources on the emitting region uniformly irradiate the planting region, four sets of main light sources 152, 154, 156 and 158 are sets in the emitting region 140, and the four sets of main light sources 152, 154, 156 and 158 are respectively disposed at four corners of the emitting region 140, such that an illuminance intensity got by any location of the planting region 130 from a plurality of the light sources is within a predetermined illuminance intensity interval. According to such light source configuration, the corner portions of the planting region 130 can get sufficient illumination, and a central region of the planting region does not get excessive illumination. The main light sources 152, 154, 156 and 158 can be light-emitting diode (LED) light sources. The main light sources 152, 154, 156 and 158 can be embedded in the emitting region 140, or can be hanged in the emitting region of the top plane (second plane) 120 in a hanging approach. To be specific, the illuminance intensity may adopt a light flux received by each unit area, and a unit thereof is lux. 1 lux represents illuminance intensity generated by the light flux of 1 lumen that is uniformly distributed in one square meter. The predetermined illuminance intensity interval can be 10,000 lux to 13,000 lux. Moreover, the illuminance intensity is also influenced by an irradiation angle of the light source, and in the present embodiment, the irradiation angle of light source is at least 100 degrees. It should be noticed that in the present embodiment, a center area of the emitting region 140 is not configured with any light source. Therefore, by configuring the light sources at the corners of the emitting region 140 of the plant lighting apparatus, and not to configure any light source to the center area of the emitting region 140, the light sources are arranged to achieve maximum economic effectiveness.

### Second embodiment

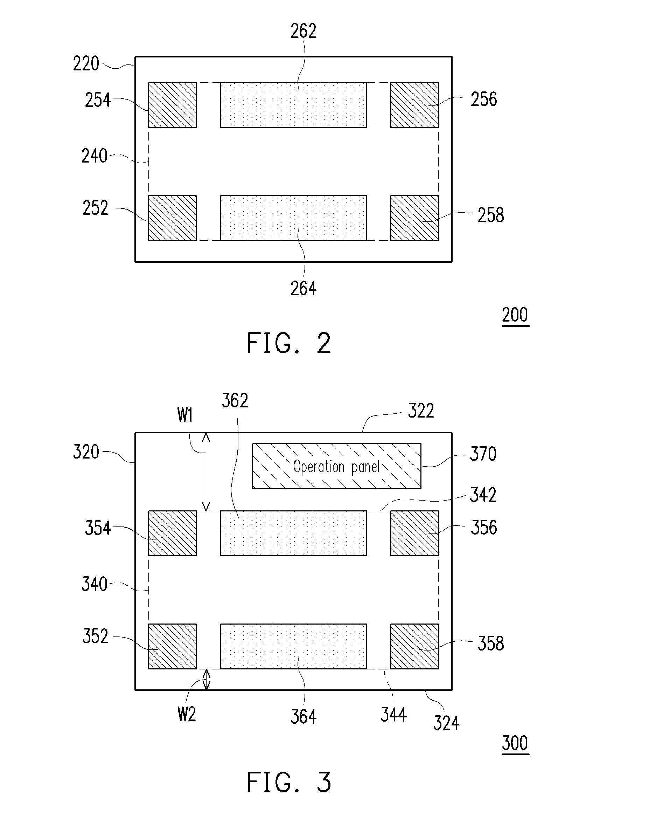

FIG. 2 is a block schematic diagram of a light source configuration of a plant lighting apparatus 200 according to a second embodiment of the invention. Referring to FIG. 2, for simplicity's sake, the main body, the bottom plane (the first plane), the planting region, etc. of the plant lighting apparatus 200 of FIG. 2 are omitted, and only a top plane (the second plane) 220 and an emitting region 240 of the plant lighting apparatus 200 are illustrated. In detail, in the present embodiment, the emitting region 240 is, for example, a rectangle and includes two long sides and two short sides. Particularly, in order ensure that the light sources on the emitting region 240 to uniformly irradiate the planting region, besides a plurality of sets of the main light sources are configured, at least one set of secondary light sources is configured at other parts of the main body. The set of secondary light sources is used for compensating insufficient light irradiation of the main light source in the planting region. Therefore, the set of secondary light sources can be disposed at one of the sides of the polygon of the emitting region 240, or disposed on other plane of the main body. In the present embodiment, four sets of main light sources 252, 254, 256 and 258 and two sets of secondary light sources 262 and 264 are configured in the emitting region 240, where the four sets of main light sources 252, 254, 256 and 258 are respectively disposed at four corners of the emitting region 240, and the two sets of secondary light sources 262 and 264 are respectively disposed in the middle of each of the two long sides of the emitting region 240, such that an illuminance intensity got by any location of the planting region from a plurality of the light sources is within the predetermined illuminance intensity interval. Based on such light source configuration, the four corners of the planting region may get sufficient lights, and a phenomenon of insufficient light irradiation of the center area of the planting region due to an excessive long distance between the two sets of main light sources on the long side is avoided. Particularly, a purpose of setting the secondary light source is to mitigate insufficiency of the main light sources, such that the secondary light source can be set at any position on the long side of the emitting region, which is not limited by the invention.

### Third embodiment

FIG. 3 is a block schematic diagram of a light source configuration of a plant lighting apparatus 200 according to a third embodiment of the invention. Referring to FIG. 3, for simplicity's sake, the main body, the bottom plane (the first plane), the planting region, etc. of the plant lighting apparatus 300 of FIG. 3 are omitted, and only a top plane (the second plane) 320 and an emitting region 340 of the plant lighting apparatus 300 are illustrated. In the present embodiment, the top plane (the second plane) 320 includes the emitting region 340 and an operation panel 370. The operation panel 370 is used for controlling the plant lighting apparatus 300, and may have a control circuit for controlling current supplying, or setting an illumination time, etc. of the plant lighting apparatus. The operation panel 370 can be disposed at one side of the man body, one side of the planting region or one side of the top plane (the second plane) 320, which is not limited by the invention. It should be noticed that configuration of the operation panel 370 limits the area of the emitting region 340, and the emitting region 340 can be shifted to one side of the top plane (the second plane) 320, such that a long side 342 (which is also referred to as a first long side) of the emitting region 340 located adjacent to the operation panel 370 and a first side 322 of the top plane (the second plane) 320 where the emitting region 340 is located have a wider space W1 therebetween, and a long side 344 (which is also referred to as a second long side) of the emitting region 340 that is not adjacent to the operation panel 370 and a second side 324 of the top plane (the second plane) 320 where the emitting region 340 is located have a shorter space W2 therebetween. In detail, in order to ensure that the light sources on the emitting region 340 uniformly irradiate the planting region, four sets of main light sources 352, 354, 356 and 358 and two sets of secondary light sources 362 and 364 are configured in the emitting region 340, where the four sets of main light sources 352, 354, 356 and 358 are respectively disposed at four corners of the emitting region 340, and the two sets of secondary light sources 362 and 364 are respectively disposed in the middle of each of the two long sides of the emitting region 340, and the number of the two sets of the main light sources 354 and 356 on the first long side 342 of the emitting region 340 can be greater than the number of the two sets of the main light sources 352 and 358 on the second long side 344 of the emitting region 340, such that an illuminance intensity got by any location of the planting region from a plurality of the light sources is within the predetermined illuminance intensity interval. Based on such light source configuration, the four corners of the planting region may get sufficient lights, and a phenomenon of insufficient light irradiation of the center area of the planting region due to an excessive long distance between the two sets of main light sources on the long side is avoided. Moreover, the part of the planting region under the part of the top plane (the second plane) 320 corresponding to the wider space between the emitting region 340 and the top plane (the second plane) 320 can also get sufficient light.

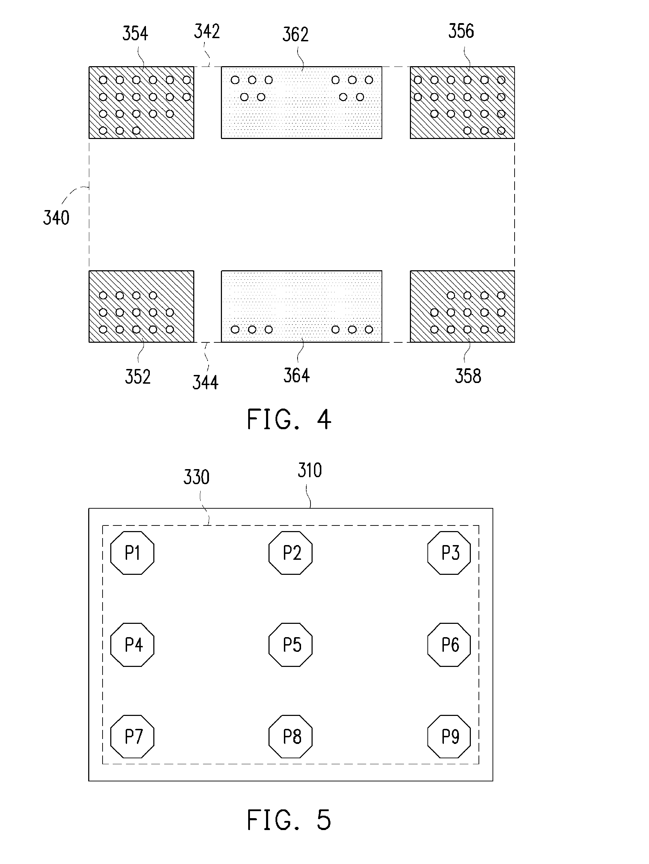

For example, FIG. 4 is a schematic diagram illustrating a configuration of LED light sources of a plant lighting apparatus according to the third embodiment of the invention. Referring to FIG. 4, in the present embodiment, four sets of main light sources 352, 354, 356 and 358 and two sets of secondary light sources 362 and 364 are configured in the emitting region 340, where the four sets of main light sources 352, 354, 356 and 358 are respectively disposed at the four corners of the emitting region 340, and the two sets of secondary light sources 362 and 364 are respectively disposed in the middle of each of the two long sides of the emitting region 340. The two sets of the main light sources 354 and 356 on the first long side 342 of the emitting region 340 that is adjacent to the operation panel 370 respectively have four rows of LED light sources, and the two sets of the main light sources 352 and 358 on the second long side 344 of the emitting region 340 that is not adjacent to the operation panel 370 respectively have three rows of LED light sources, such that an illuminance intensity got by any location of the planting region from a plurality of the light sources is within the predetermined illuminance intensity interval. Particularly, the part of the planting region under the part of the top plane (the second plane) 320 corresponding to the wider space between the emitting region 340 and the top plane (the second plane) 320 can also get sufficient light. It should be noticed that in an embodiment, the number of the secondary light sources on the first long side 342 can be greater than the number of the secondary light sources on the second long side 344. For example, the secondary light sources 362 may include two rows of LED light sources, and the secondary light sources 364 may include one row of LED light sources.

It should be noticed that according to the LED light source configuration of FIG. 4, if the LED light source with a current of 120 mA, an irradiation angle of 120 degrees, and a light flux of 44.1-48.2 lumens is adopted, when the LED light sources are driven by current to implement an optical simulation, the uniformly distributed illuminance intensity can be obtained within the area of the planting region, and the predetermined illuminance intensity interval of 10,000 lux to 13,000 lux is matched. It should be noticed that the user can select different predetermined illuminance intensity intervals according to different plant species planted in the plant lighting apparatus and different illumination levels of the ambient environment, which is not limited to the aforementioned disclosure. In other words, the predetermined illuminance intensity interval of the present embodiment can be adjusted according to different planted plants.

FIG. 5 is a schematic diagram illustrating illuminance measuring positions of the plant lighting apparatus according to the third embodiment of the invention. Referring to FIG. 5, in the present embodiment, according to the implementation of the third embodiment of the plant lighting apparatus, 9 measuring points P1-P9 are respectively set in the plating region 330 on the bottom plane (the first plane) 310 of the plant lighting apparatus 300 to measure the illuminance intensities. A following table one lists the measured illuminance intensities.

**Table 1**

| Measuring point | P1 | P2 | P3 | P4 | P5 |
|---|---|---|---|---|---|
| Lux | 10,964 | 10,957 | 10,955 | 11,117 | 11,243 |
| Measuring point | P6 | P7 | P8 | P9 | |
| Lux | 11,115 | 11,054 | 11,043 | 11,057 | |

In the present embodiment, the predetermined illuminance intensity interval is between 10,000 lux and 13,000 lux. According to the table 1, it is known that the illuminance intensities measured at the 9 measuring points all fall within the range of the predetermined illuminance intensity interval. In other words, each plant in the plant lighting apparatus of the invention can get a uniform illumination, so as to improve a harvest quality.

It should be noticed that in an embodiment of the invention, in order to ensure that any location in the planting region can get the uniform illumination, the main body of the plant lighting apparatus further includes at least one set of auxiliary light sources, which is disposed at any side of the main body, where the any side is different to a plane where the emitting region is located.

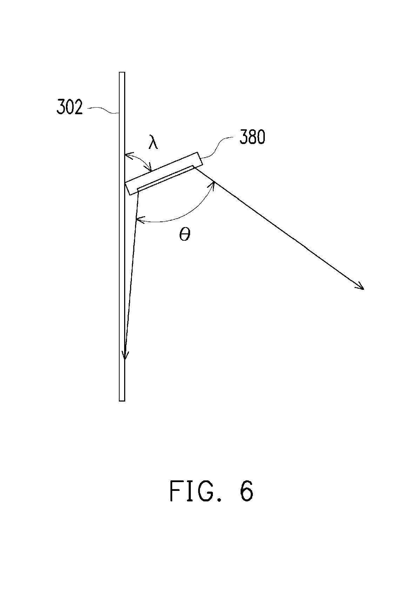

For example, FIG. 6 is a schematic diagram of a light source configuration of the plant lighting apparatus according to an embodiment of the invention. Referring to FIG. 6, in the present embodiment, in the plant lighting apparatus 300, the set of auxiliary light sources 380 can be disposed at any side of main body that is different to the plane 320 where the emitting region 340 is located. For example, a side 302 of the plant lighting apparatus 300 can be any side plane (which is also referred to as a third plane) in the planting lighting apparatus that is different to the plane 320 where the emitting region 340 is located, or can be any side pole of the plant lighting apparatus 300. The side plane is different to the top plane (the first plane) where the emitting region is located. The set of auxiliary light sources 380 and the side 302 of the plant lighting apparatus 300 include an inclination angle λ, and the set of auxiliary light sources 380 have an irradiation angle θ. In this way, an irradiation area of the set of auxiliary light sources 380 may fall in the panting region, so as to compensate insufficient illuminance intensity.

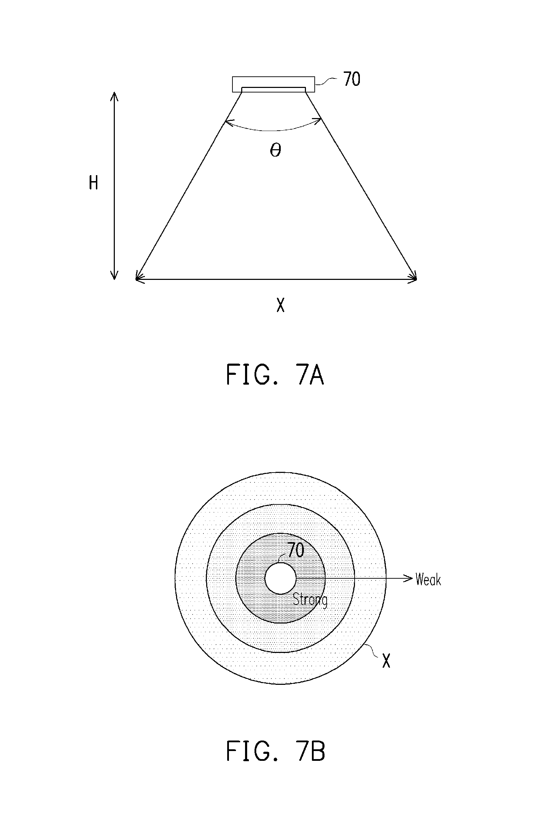

It should be noticed that the sets of the main light sources, the secondary light sources, and the auxiliary light sources respectively have an irradiation height and an irradiation angle, and an irradiation area can be obtained according to the irradiation heights and the irradiation angles. For example, FIG. 7A and FIG. 7B are schematic diagrams illustrating irradiation of a set of light sources of the plant lighting apparatus, where FIG. 7A is a front view of a set of light sources 70, and FIG. 7B is a top view of the set of light sources 70. Referring to FIG. 7A, the set of light sources 70 adopts an LED light sources, and has an irradiation height H, and the irradiation height H is, for example, 200 mm. The set of light sources 70 has an irradiation angle θ, and the irradiation angle θ can be ranged from 120 to 160 degrees. Moreover, an irradiation area X can be obtained according to the irradiation height H and the irradiation angle θ. Referring to FIG. 7B, distribution of the illuminance intensities in the irradiation area X of the set of light sources 70 can be a concentric circle, the illuminance intensity at a center (a circle center) of the set light sources 70 is the strongest, and the more it is close to the periphery of the irradiation area X, the weaker the illuminance intensity is. The plant lighting apparatus of the invention implements light source configuration according to the above light source characteristic.

### Fourth embodiment

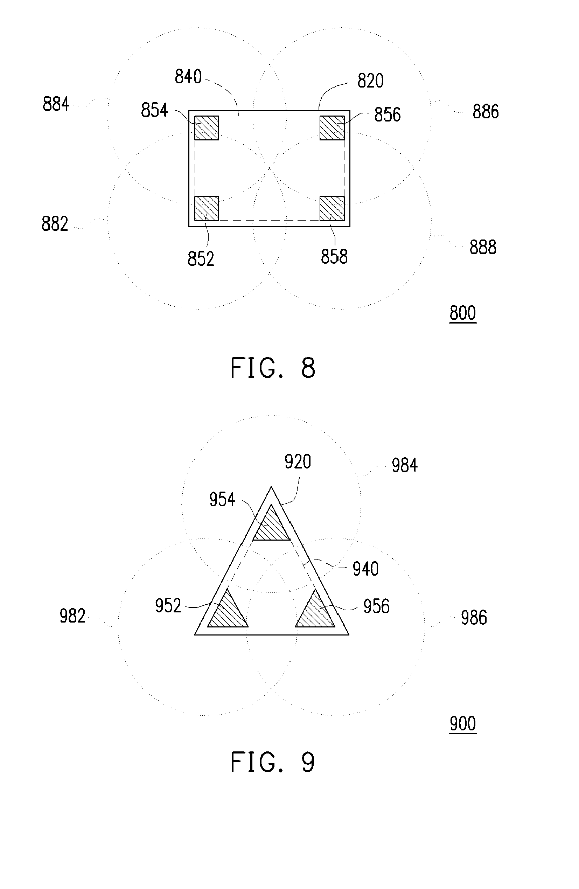

FIG. 8 is a block schematic diagram of a light source configuration of a plant lighting apparatus 800 according to a fourth embodiment of the invention. Referring to FIG. 8, for simplicity's sake, the main body, the bottom plane (the first plane), the planting region, etc. of the plant lighting apparatus 800 of FIG. 8 are omitted, and only a top plane (the second plane) 820 and an emitting region 840 of the plant lighting apparatus 800 are illustrated. In detail, in the present embodiment, the emitting region 840 is, for example, a rectangle, and four sets of main light sources 852, 854, 856 and 858 are respectively disposed at four corners of the emitting region 840. Irradiation areas of the four sets of the main light sources 852, 854, 856 and 858 are respectively 882, 884, 886 and 888 and include the top plane (the second plane) 820. Particularly, when the bottom plane (the first plane) is set opposite to the top plane (the second plane) 820 and is located within the distance of the irradiation height of the sets of the main light sources, the planting region on the bottom plane (the first plane) can be covered by the irradiation areas 882, 884, 886 and 888 of the sets of the main light sources.

### Fifth embodiment

FIG. 9 is a block schematic diagram of a light source configuration of a plant lighting apparatus 900 according to a fifth embodiment of the invention. Referring to FIG. 9, for simplicity's sake, the main body, the bottom plane (the first plane), the planting region, etc. of the plant lighting apparatus 900 of FIG. 9 are omitted, and only a top plane (the second plane) 920 and an emitting region 940 of the plant lighting apparatus 900 are illustrated. In detail, in the present embodiment, the emitting region 940 is, for example, a triangle, and three sets of main light sources 952, 954 and 956 are respectively disposed at three corners of the emitting region 940. Irradiation areas of the three sets of the main light sources 952, 954 and 956 are respectively 982, 984 and 986 and include the top plane (the second plane) 920. Particularly, when the bottom plane (the first plane) is set opposite to the top plane (the second plane) 920 and is located within the distance of the irradiation height of the sets of the main light source, the planting region on the bottom plane (the first plane) can be covered by the irradiation areas 982, 984, 986 of the sets of the main light sources.

In some embodiments, configuration of sets of the main light sources can be properly adjusted according to the irradiation height and the irradiation area. To be specific, all of the corners of the emitting region can be configured with the sets of the main light sources, i.e. even if none light source is configured at the center of the emitting region, an effect that any location of the planting region gets uniform illuminance intensity is achieved. Moreover, in order to meet economic effectiveness, those skilled in the art can also selectively configure the sets of the main light sources to a part of corners of the polygon of the emitting region without configuring the same to all of the corners of the polygon of the emitting region.

### Sixth embodiment

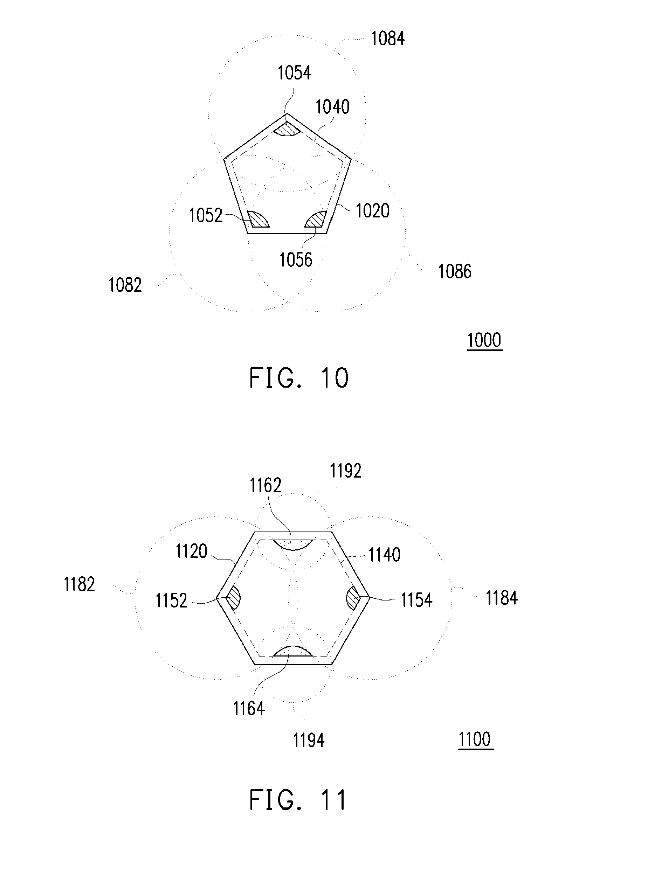

FIG. 10 is a block schematic diagram of a light source configuration of a plant lighting apparatus 1000 according to a sixth embodiment of the invention. Referring to FIG. 10, for simplicity's sake, the main body, the bottom plane (the first plane), the planting region, etc. of the plant lighting apparatus 1000 of FIG. 10 are omitted, and only a top plane (the second plane) 1020 and an emitting region 1040 of the plant lighting apparatus 1000 are illustrated. To be specific, those skilled in the art can choose three corners of the emitting region 1040 with a shape of a pentagon to configure three sets of the main light sources, for example, 1052, 1054 and 1056, where two corners adjacent to the set of the main light sources 1054 are not configured with the main light source. Irradiations areas of each set of the main light sources are 1082, 1084 and 1086, and include the top plane (the second plane) 1020. Particularly, when the bottom plane (the first plane) is set opposite to the top plane (the second plane) 1020 and is located within the distance of the irradiation height of the sets of the main light sources, the planting region on the bottom plane (the first plane) can be covered by the irradiation areas 1082, 1084 and 1086 of the sets of the main light sources. In this way, the effect of uniform illuminance intensity is achieved through less sets of light sources.

In some embodiments, those skilled in the art can selectively configure the sets of the main light sources to a part of the corners of the polygon of the emitting region, and configure the sets of the secondary light sources at places with insufficient illuminance for reinforcement, and it is unnecessary to configure the sets of the main light sources to all of the corners of the polygon of the emitting region.

### Seventh embodiment

FIG. 11 is a block schematic diagram of a light source configuration of a plant lighting apparatus 1100 according to a seventh embodiment of the invention. Referring to FIG. 11, for simplicity's sake, the main body, the bottom plane (the first plane), the planting region, etc. of the plant lighting apparatus 1100 of FIG. 11 are omitted, and only a top plane (the second plane) 1120 and an emitting region 1140 of the plant lighting apparatus 1100 are illustrated. To be specific, those skilled in the art can choose two corners of the emitting region 1140 with a shape of a hexagon to configure two sets of the main light sources, for example, two sets of the main light sources 1152 and 1154 are configured at two opposite corners of the hexagon. Irradiations areas of each set of the main light sources are 1182 and 1184. Two sets of secondary light sources, for example, 1162 and 1164 can be set on two opposite sides with insufficient illuminance intensity. Irradiations areas of each set of the secondary light sources are 1192 and 1194. The irradiation areas of all sets of the main light sources and all sets of the secondary light sources include the top plane (the second plane) 1120. Particularly, when the bottom plane (the first plane) is set opposite to the top plane (the second plane) 1120 and is located within the distance of the irradiation height of the sets of the main light sources, the planting region on the bottom plane (the first plane) can be covered by the irradiation areas 1182, 1184, 1192 and 1194 of all sets of the main light sources and all sets of the secondary light sources. In this way, the effect of uniform illuminance intensity is achieved through least sets of light sources.

### Eighth embodiment

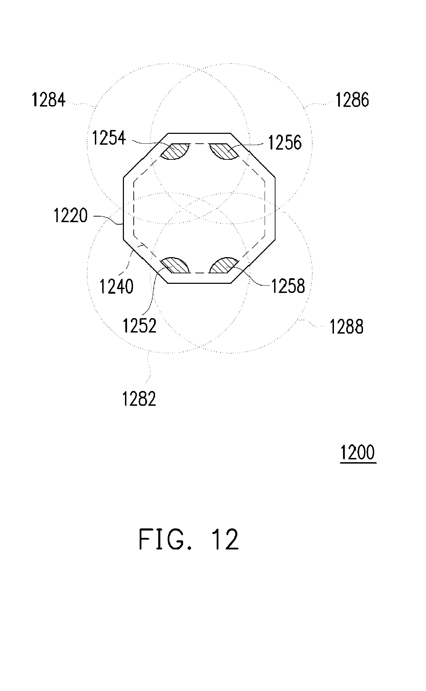

FIG. 12 is a block schematic diagram of a light source configuration of a plant lighting apparatus 1200 according to an eighth embodiment of the invention. Referring to FIG. 12, for simplicity's sake, the main body, the bottom plane (the first plane), the planting region, etc. of the plant lighting apparatus 1200 of FIG. 12 are omitted, and only a top plane (the second plane) 1220 and an emitting region 1240 of the plant lighting apparatus 1200 are illustrated. To be specific, those skilled in the art can choose four corners of the emitting region 1240 with a shape of an octagon to configure four sets of the main light sources, for example, four sets of the main light sources 1252, 1254, 1256 and 1258 are respectively configured at four corners opposite to each other in pairs in the emitting region of the octagon. Irradiations areas of each set of the main light sources are 1282, 1284 1286 and 1288. The irradiation areas of all sets of the main light sources include the top plane (the second plane) 1220. Particularly, when the bottom plane (the first plane) is set opposite to the top plane (the second plane) 1220 and is located within the distance of the irradiation height of the sets of the main light sources, the planting region on the bottom plane (the first plane) can be covered by the irradiation areas 1282, 1284, 1286 and 1288 of all sets of the main light sources. In this way, the effect of uniform illuminance intensity is achieved through least sets of light sources.

In summary, in the plant lighting apparatus, multiple sets of the main light sources are disposed at a plurality of corners of the emitting region, such that even if the emitting region does not completely cover the planting region, any location in the planting region can still get uniform illuminance intensity. Moreover, in the plant lighting apparatus of the invention, at least two sets of the secondary light sources can be set at the long sides of the emitting region, such that even if the main light sources are located relatively away from the long sides of the emitting region, there are still sufficient light sources for irradiating the corresponding planting region. In addition, in the plant lighting apparatus of the invention, the side of the emitting region close to the wider space between the emitting region and the plane where the emitting region is located may have more number of the light sources, such that even if the area of the emitting region mapped to the planting region is smaller than the area of the planting region, any location of the planting region can still get the uniform illuminance intensity. Moreover, in the plant lighting apparatus of the invention, a plurality sets of the auxiliary light sources can be configured at a plane different to the plane where the emitting region is located, so as to reinforce the illuminance intensity. Therefore, by using the plant lighting apparatus of the invention, the plants may get uniform illuminance intensity, such that growth of each plant is balanced to enhance the quality of the plants at harvest.

## Claims

1. A plant lighting apparatus (100, 200), comprising:
a main body (105), having a first plane (110) and a second plane(120, 220), wherein the first plane (110) is opposite to the second plane (120, 220);
a planting region (130), located on the first plane (110) of the main body (105);
an emitting region (140, 240), being a polygon, located on the second plane (120, 220) of the main body (105); and
a plurality sets of main light sources (152, 154, 156, 158, 252, 254, 256, 258), respectively disposed at a plurality of corners of the emitting region (140), such that an illuminance intensity of the planting region (130) obtained from the plurality sets of main light sources (152, 154, 156, 158) is within a predetermined illuminance intensity interval.

2. The plant lighting apparatus (100, 200) as claimed in claim 1, further comprising:
at least one set of secondary light source (262, 264, 362, 364), respectively disposed on at least one side of the emitting region (140, 240).

3. The plant lighting apparatus (100, 200) as claimed in claim 1, wherein the main light sources (152, 154, 156, 158, 252, 254, 256, 258) are respectively disposed at all of the corners or a part of the corners of the emitting region (140, 240).

4. The plant lighting apparatus (300) as claimed in claim 1, wherein the polygon is a rectangle, and the main body (105) further comprises an operation panel (370), the operation panel (370) is adjacent to a first long side (342) of the emitting region (340), the operation panel (370) is not adjacent to a second long side (344) of the emitting region (340), a space (W1) between the first long side (342) and a first side (322) of the second plane (320) where the emitting region (340) is located is wider than a space (W2) between the second long side (344) and a second side (324) of the second plane (320) where the emitting region (340) is located, and the number of the two sets of the main light sources (362) on the first long side (342) is greater than the number of the two sets of the main light sources (364) on the second long side (344).

5. The plant lighting apparatus (300) as claimed in claim 4, wherein the two sets of the main light sources (354, 356) on the first long side (342) respectively comprise four rows of light-emitting diode light sources.

6. The plant lighting apparatus (300) as claimed in claim 4, wherein the two sets of the main light sources (352, 358) on the second long side (344) respectively include three rows of light-emitting diode light sources.

7. The plant lighting apparatus as claimed in claim 4, wherein the number of the at least one secondary light source (362) on the first long side (342) is greater than the number of the at least one secondary light source (364) on the second long side (344).

8. The plant lighting apparatus (100, 200, 300) as claimed in claim 1, wherein a center area of the emitting region (140, 240, 340) is not configured with any light source.

9. The plant lighting apparatus (100) as claimed in claim 1, wherein the first plane (110) and the second plane (120) are spaced by 200 mm.

10. The plant lighting apparatus (100, 200, 300) as claimed in claim 1, wherein an irradiation angle of the light sources is at least 100 degrees.

11. The plant lighting apparatus (100, 200, 300) as claimed in claim 1, wherein the predetermined illuminance intensity interval is 10,000 lux to 13,000 lux.

12. The plant lighting apparatus (300) as claimed in claim 1, wherein the main body further comprises at least one set of auxiliary light sources (380) disposed at a third plane (302) of the main body, wherein the third plane (302) is different to the second plane (320) where the emitting region (340) is located.

13. The plant lighting apparatus (900) as claimed in claim 1, wherein the polygon is a triangle, and the sets of the main light sources (952, 954, 956) are respectively disposed at all of the corners of the emitting region (940).

14. The plant lighting apparatus (1000) as claimed in claim 1, wherein the polygon is a pentagon, and the sets of the main light sources (1052, 1054, 1056) are respectively disposed at any three corners of the emitting region (1040), wherein two corners adjacent to one set of the main light sources (1054) are not configured with the main light source.

15. The plant lighting apparatus (1200) as claimed in claim 1, wherein the polygon is an octagon, and the sets of the main light sources (1252, 1254, 1256, 1258) are respectively disposed at four corners opposite to each other in pairs in the emitting region (1240).
